(19) Europäisches Patentamt
European Patent Office
Office européen des brevets

(11) Publication number: 0 265 223 B1

(12) # EUROPEAN PATENT SPECIFICATION

(45) Date of publication of the patent specification: 31.01.90

(51) Int. Cl.⁴: C09C 1/42, C08K 9/06, C08L 21/00

(21) Application number: 87309248.0

(22) Date of filing: 20.10.87

(54) **Surface modified pigments and methods for producing same and elastomers containing same.**

(30) Priority: 20.10.86 US 921141
25.09.87 US 99316

(43) Date of publication of application: 27.04.88 Bulletin 88/17

(45) Publication of the grant of the patent: 31.01.90 Bulletin 90/5

(84) Designated Contracting States: AT BE CH DE ES FR GB GR IT LI LU NL SE

(56) References cited:
EP-A- 0 126 871
FR-A- 2 007 761

CHEMICAL ABSTRACTS, vol. 94, no. 4, 26th January 1981, page 59, abstract no. 16901w, Columbus, Ohio, US; & SP-A-482 033 (TOLSA S.A.) 01-04-1980

(73) Proprietor: E.C.C. AMERICA INC., 5775 Peachtree-Dunwoody Road N.E. Suite 200 G, Atlanta Georgia 30342(US)

(72) Inventor: Prescott, Paul I., 150 Rockbridge Road, Lilburn, Georgia 30247(US)
Inventor: Rice, Camilla Arlyn, 634 W. Church Street Sandersville, Georgia 31082(US)

(74) Representative: Bull, Michael Alan et al, Haseltine Lake & Co. Hazlitt House 28 Southampton Buildings Chancery Lane, London WC2A 1AT(GB)

EP 0 265 223 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to inorganic pigments and, more particularly, is concerned with modifications of inorganic pigments, e.g., clays. In particular, the present invention is concerned with the modification of finely divided particulate clays such as kaolin clays by treatment with mercaptopropylsilanes to improve their usefulness as reinforcing fillers in rubber.

It is known from US-A-3567680 that mercaptopropyl silanes having the formula:

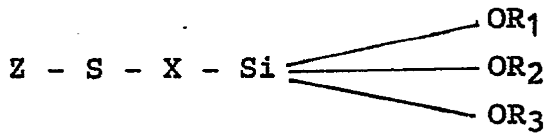

(1)

in which Z is chosen from hydrogen, cation, alkyl, aryl, alkylaryl, arylalkyl and derivatives thereof; X is chosen from alkyl, alkylaryl and arylalkyl; and $R_1$, $R_2$, and $R_3$, are chosen from hydrogen, cation and alkyl, are suitable for modifying kaolin clays to enable them to be used as reinforcing fillers for elastomers. In fact, the thus modified clays have been the candidates of choice for such fillers in commerce. It may be noted that, in US-A-3567680, only the trialkoxymercaptopropyl silanes are considered.

In US-A-3364059, a method for treating glass fibres to improve their bonding relationship to rubbers is disclosed. The method comprises treating them with a silane which has from 1 to 3 highly hydrolyzable groups and an organic group attached to the silicon atom containing a thio group, as represented by the formula $R_nSiX_{(4-n)}$ wherein X is a highly hydrolyzable group such as halogen (e.g. chlorine, bromine, iodine), methoxy, ethoxy, propoxy or another similar short-chained alkoxy group.

In US-A-4143027, mercaptosilane powder mixtures are described having a superior shelf life and which are added during compounding of rubbers to provide a desirable amount of the silane therein. The object is to absorb a silane on a powder and achieve good storage stability. Example 1 of US-A-4143027 shows a rubber composition comprising a hydrous clay-filled polyisoprene, various additives and the silane powder mixture, the silane compounds described being the trimethoxy, -ethoxy and -n-propoxy mercaptopropyl silanes of which the latter two are stated to exhibit far greater stability in storage than the methoxy compounds.

It has now been unexpectedly found that a different structure of mercaptopropyl silanes is more desirable as a modifier of clays, producing more effective reinforcing fillers for materials such as elastomers and plastics. The treated materials show unexpected improvements in tear resistance and also better stock-to-stock adhesion.

According to a first aspect of the present invention, there is provided a finely divided particulate reinforcing material suitable as a filler for an elastomer, comprising a hydrous clay, the surface of which has been modified by treatment with a mercaptosilane, characterised in that the mercaptosilane is of the following general formula :

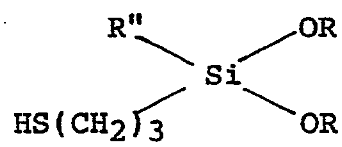

wherein R is an alkyl radical and R" is an alkyl radical or an aryl radical.

Preferably, R" is a lower alkyl radical such as methyl or ethyl or an aryl radical such as phenyl. Preferably, R is a lower alkyl having from one to four carbon atoms.

Silanes of the structure used in the present invention are commercially available as Dynasylan 3403, as advertised in a brochure of Dynamit Nobel, Kay-Fries Chemical Division entitled "Dynasylan Organo Functional Silanes/Coupling Agents".

The clay employed as starting material may be any hydrous clay, for example one that has not been calcined, i.e. dehydroxylated, since the hydroxyl groups are needed in the treatment with the silane. Most preferably, the hydrous clay is a kaolin clay. With regard to terminology, it may be noted that although the term "hydrous" is commonly used, strictly speaking there is no molecular water actually present in the kaolinite structure as it is now well known that kaolinite is an aluminium hydroxide silicate of approximate composition $Al_2(OH)_4Si_2O_5$. Commerically available clays useful for the present purpose include kaolins such as Alphaplate ®, which is a delaminated kaolin, having 80% by weight of its particles below 2 micrometers; Alphagloss ® (94-96% less than 2 micrometers); and Betagloss ® (94-96% less than 2 micrometers). These and other suitable kaolins are available from the Anglo-American Clays subsidiary of E.C.C. America, Inc. of Atlanta, Georgia.

It is believed that the improvement in the modified clays of the present invention, as reinforcing fillers for rubber, may arise from a change in their sterochemistry and/or in their hydrophobicity.

According to a second aspect of the present invention, there is provided a method for reinforcing elastomers comprising the steps of: (i) modifying the surface of a hydrous clay by treatment of the clay with from 0.2 to 0.7% by weight, based on the weight of the dry clay, of a mercaptosilane having the general formula :

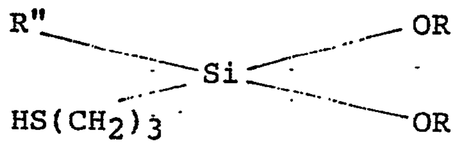

in which R is an alkyl radical and R" is an alkyl radical or an aryl radical; and (ii) combining the thus surface modified clay with an elastomeric material.

Preferably, from 0.25% to 0.45% of the mercaptosilane, based on the weight of the dry clay, is added to the slurry.

As previously mentioned, the hydrous clay is preferably a kaolin.

According to a third aspect of the present invention, there is provided a reinforced elastomer comprising an elastomeric material and, as a filler, a hydrous clay the surface of which has been modified by treatment with a mercaptosilane having the general formula :

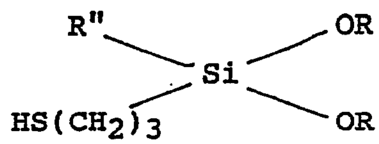

in which R is an alkyl, and R" is an alkyl radical or an aryl radical.

According to a fourth aspect of the present invention there is provided a process for preparing a finely divided particulate mercaptosilane surface treated clay suitable for use as a filler for an elastomer, which process comprises: preparing a dispersed aqueous clay slurry; adding to said slurry, in an amount of from 0.2 to 0.7% by weight, based on the weight of the dry clay, of a mercaptosilane of the following formula :

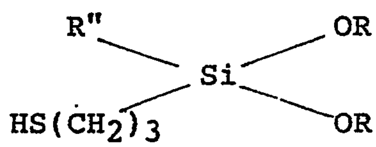

wherein R is an alkyl radical and R" is an alkyl radical or an aryl radical; and spray drying said slurry to produce said mercaptosilane surface modified clay.

Typically, a kaolin clay is mined and the crude is subjected to conventional beneficiation procedures, which may include such steps as magnetic separation and bleaching. The kaolin is isolated, for example by flocculation and filtering. The filter cake is then redispersed in water to form, for example, a 50% to 60% solids slurry and mixed with a mecaptosilane of the formula used in the present invention. The reaction is almost instantaneous. The slurry may then be spray dried to give the modified clay product.

A typical formulation with rubber comprises 75 parts by weight filler to 100 parts rubber, together with modifiers, aids, and the like as shown in Formulation 1. The trade names used throughout are identified in Table 9

Formulation 1

| Ingredient | Parts by weight |
|---|---|
| Natsyn 2200 | 100.0 |
| ZnO | 5.0 |
| Stearic acid | 2.0 |
| Agerite white | 1.0 |
| OBTS | 1.25 |
| TMTD | 0.2 |
| Sulphur | 2.75 |
| Mercaptosilane treated clay | 75.0 |
| Total | 187.2 |

When rubber formulations such as these are subjected to conventional curing, the resultant products are found to have superior characteristics, in terms of, for example, improved tear resistance and improved stock-to-stock adhesion, in comparison to products including prior art silane treated clay fillers.

Extensive studies showed surprisingly superior properties for the products of the present invention. In these studies, the silane employed was an alkyldimethoxy mercaptopropylsilane, e.g., methyldimethoxy mercaptopropylsilane, and it was used to treat five different hydrous kaolin clays. Typical physical properties of silane treated clays in accordance with the present invention are given in Table 1. These products were prepared using amounts of the mercaptosilane in the range of from 0.25 to 0.45% by weight, based on the weight of the dry clay.

Table 1

Mercaptosilane treated hydrous clays

Typical properties

| Product designation | P1 | P2 | P3 | P4 | P5 |
|---|---|---|---|---|---|
| G. E. Brightness, % | 87–90 | 85–88 | 90–92 | 85–88 | 90–92 |
| Specific gravity | 2.63 | 2.63 | 2.63 | 2.63 | 2.63 |
| Particle size, in %, less than 2 microns | 80 | 92 | 95 | 92 | 95 |
| Particle size, avg. microns | .40 | .25 | .20 | .25 | .20 |
| pH (3) | 7.0 | 7.0 | 7.0 | 7.0 | 7.0 |
| Screen residue, %, max. (325 mesh, i.e. 0.045 mm nominal aperture) (2) | .01 | .01 | .01 | .01 | .01 |
| Moisture, % max. (1 hr. @ 105°C) as packaged (1) | 1.0 | 1.0 | 1.0 | 1.0 | 1.0 |
| Bulk density kg/m$^3$ (lbs/ft$^3$) | 800 (50) | 800 (50) | 800 (50) | 800 (50) | 800 (50) |

The treated clays impart these properties to rubber compositions:

1. High modulus
2. Low Hysteresis
3. Improved Tear Resistance
4. Improved Stock-to-Stock Adhesion
5. Good Heat Aging Properties
6. Low Viscosity Levels (relative to loading)
7. Improved permeability resistance to Air, Gas, and Moisture

These and other advantages of the present invention will be illustrated by the following non-limiting Examples.

Example 1

This example is illustrative of the use of the present invention in passenger car tyre white sidewall (WSW) portions of a tyre body. The WSW-I formulation defined below was tested against similar formulations containing prior art products A and B which were treated in a similar process using trimethoxy mercaptopropylsilane instead of the dialkoxy mercaptosilanes used in the present invention. The physical properties of these systems are provided in Table 2.

| WSW-I Formulation | |
|---|---|
| SMR-5 | 30.00 |
| EPDM | 10.00 |
| Chlorobutyl rubber | 60.00 |
| Treated clay | 40.00 |
| $TiO_2$ | 25.00 |
| ZnO | 5.00 |
| Wax | 5.00 |
| Stearic acid | 1.00 |
| U-M blue | 0.40 |
| Vultac 5 | 1.00 |
| MBTS | 0.75 |
| Sulphur | 0.50 |
| Total | 148.65 |

Table 2

Mercaptosilane treated clay P4 vs. prior art product A
Mercaptosilane treated clay P5 vs. prior art product B

| Cured 20 min @ 160°C | | A | P4 | B | P5 |
|---|---|---|---|---|---|
| 300% Modulus | kg/sq.cm | 45 | 39 | 39 | 46 |
| Tensile | kg/sq.cm | 116 | 140 | 130 | 138 |
| Elongation | % | 550 | 600 | 650 | 600 |
| Hardness | Shore A | 56 | 56 | 55 | 57 |
| Trouser tear | kg/cm | 13.9 | 15.7 | 13.6 | 16.6 |
| Stock-to-Stock adhesion | kg/cm | 3.2 | 4.1 | 3.2 | 5.4 |

In this high chlorobutyl rubber tri-blend composition, both the P4 and P5 treated clays are compared with their respective prior art counterparts.

Both treated clays provide superior tear resistance and stock-to-stock adhesion with the P5 treated rubber being the most effective. All teating procedures used in this and the following examples are ASTM as identified in Table 10.

Example 2

In this second Example using the WSW-II formulation, which is higher than WSW-I in natural rubber content, the P5 product is compared with the prior art B product.

| WSW-II formulation | C | D |
|---|---|---|
| Vistalon 4608 | 20.00 | 20.00 |
| SMR-5 | 60.00 | 60.00 |
| HT 1066 | 20.00 | 20.00 |
| $TiO_2$ | 30.00 | 30.00 |
| Silane treated clay P5 | 40.00 | – |
| Prior art B product | – | 40.00 |
| Platey talc | 20.00 | 20.00 |
| MgO | .50 | .50 |
| U-M blue | .20 | .20 |
| Stearic acid | 1.00 | 1.00 |
| ZnO | 5.00 | 5.00 |
| Insol. sulphur | .67 | .67 |
| MBTS | .75 | .75 |
| Vultac 5 | 1.25 | 1.25 |
| Totals | 199.37 | 199.37 |

Table 3

| WSW-II formulation data<br>Cured 45 min @ 149°C | | C | D |
|---|---|---|---|
| Modulus 100% | kg/sq.cm | 25.3 | 20.4 |
| Modulus 200% | kg/sq.cm | 44.9 | 37.9 |
| Modulus 300% | kg/sq.cm | 63.3 | 55.5 |
| Tensile | kg/sq.cm | 135.0 | 128.0 |
| Elongation | % | 530 | 550 |
| Trouser tear | kg/cm RT | 6.8 | 2.6 |
| | kg/cm 100°C | 4.8 | 3.1 |

Formulation C (including the treated clay P5) exhibits higher modulus than Composition D (including prior art clay B), which translates to improved buffing. Hot tear resistance is also superior by a significant margin.

The treated clay P5 also has a high G.E. Brightness of 90-92 and can be considered as a partial replacement for $TiO_2$ is WSW and in other colour applications. The cost advantage of such a substitution is also attractive.

EXAMPLE 3

Example 3 demonstrates the advantages of using one of the products of this invention in a tyre innerliner. The formulation is given below :

| Innerliner filler ratios | F | G | H |
|---|---|---|---|
| HT1068 | 100 | 100 | 100 |
| N660 | 70 | 45 | – |
| N650 | – | – | 45 |
| Hard clay | 24 | – | – |
| Silane treated clay P1 | – | 50 | 50 |

N660 and N650 are recognized trade carbon blacks used by the rubber industry in tyre applications.

The control, composition F, uses a conventional mix of N660 (carbon black) blended with an untreated hard clay. Compositions G and H blend the silane treated clay P1 with N660 and N650 carbon blacks

respectively. The physical properties of the three compositions (F, G, H respectively) are given in Table 4 below.

The air permeability of compositions G and H show a significant increase in permeability resistance approaching the optimum that can be imparted by incorporating a reinforcing mineral pigment. This advantage in increased resistance to air permeability is due not only to the crosslinking ability imparted by the mercaptosilane surface treated clay but also to the particle shape of the kaolin product: i.e. the P1 product is based on a delaminated kaolin.

Table 4

| Innerliner test data | | | | | |
|---|---|---|---|---|---|
| Cured @ 145°C | | min | F | G | H |
| Modulus 300% | kg/sq.cm | 45' | 26.7 | 26.7 | 29.5 |
| Tensile | kg/sq.cm | 45' | 84.4 | 91.4 | 86.5 |
| Elongation | % | 45' | 700 | 780 | 700 |
| Hardness | shore A | 45' | 55 | 55 | 55 |
| Scorch | MS3 @ 121°C | | 30 | 30 | 30 |
| Viscosity | ML4 @ 100°C | | 52 | 46 | 47 |
| Monsanto Flex Fatigue | | 55' | | | |
| 1,000 cyles RT (room temp.) | | | 50.1 | 34.9 | 29.1 |
| (70 hr @ 100°C) aged | | | 16.6 | 21.1 | 15.9 |
| Air permeablity (l/sq.m/24 hr/100 PA/0.075 cm) | | | 0.445 | 0.251 | 0.195 |

The stress-strain results are essentially, equivalent, with aged flex equal to, or better than, control for the compositions containing treated clay P1.

The improved permeability resistance obtained through carbon black reduction and replacement with treated delaminated clay permits :

1. An improved compound at reduced cost.
2. A reduction in overall chlorobutyl rubber content -- also a cost savings.
3. A possible gauge reduction (thickness) which would also reduce cost.

This improved permeability resistance can also offer advantages in systems such as fuel hose, Freon hose, and tank and pond liners.

Example 4

The advent of single ply roofing membrane has allowed the use of silane treated clays in both white and black compositions. Example 4 illustrates the use of these silane treated products of the invention in both compositions. The white EPDM roofing membrane formulation is given in Table 5 along with the physical property data.

The following white EPDM roofing study demonstrates the advantages of using treated clays P1 or P3 as (1) a reinforcing filler, (2) to extend $TiO_2$ (or partially to replace $TiO_2$ with these high GE brightness products), and (3) to provide a resistance to "crimping" before installation. Where optimum permeability resistance or a higher loading is desired, treated clay P1 would be preferred to treated clay P3.

Table 5

| White EPDM roofing formulation | I | J |
|---|---|---|
| Epsyn 5206 | 100.00 | 100.00 |
| Irganox 1035 | 1.00 | 1.00 |
| ZnO | 5.00 | 5.00 |
| Silane treated clay P1 | 100.00 | – |
| Silane treated clay P3 | – | 100.00 |
| $TiO_2$ | 25.00 | 25.00 |
| Napthenic oil | 30.00 | 30.00 |
| Zn stearate | 1.00 | 1.00 |
| MBTS | 0.75 | 0.75 |
| ZDBC | 0.75 | 0.75 |
| Sulfasan R | 1.25 | 1.25 |
| Sulfur | 0.75 | 0.75 |
| Total | 265.50 | 265.50 |

White EPDM roofing data

| Cured 30 min @ 160°C | | | I | J |
|---|---|---|---|---|
| Modulus 100% | kg/sq.cm | Orig. | 28.2 | 21.1 |
| | | Aged | 59.1 | 47.8 |
| | | % Change | +52.4 | +55.9 |
| Modulus 300% | kg/sq.cm | Orig. | 44.4 | 43.0 |
| | | Aged | 78.7 | 88.6 |
| | | % Change | +42.8 | +51.6 |
| Tensile | kg/sq.cm | Orig. | 148.6 | 159.2 |
| | | Aged | 88.6 | 99.1 |
| | | % Change | –40.0 | –37.6 |
| Elongation | % | Orig. | 740 | 750 |
| | | Aged | 440 | 420 |
| | | % Change | –40.5 | –44.0 |
| Hardness | Shore A | Orig. | 65 | 63 |
| | | Aged | 80 | 78 |
| | | Change pts. | +15 | +15 |
| Fluid Immersion | | % Wt. Change | +4.4 | +4.4 |

Aging Conditions: 28 days @ 100°C in air circulating oven; 24 hour recovery.

Fluid Immersion Conditions: 168 hours @ 100°C in distilled water with 1/2 hour recovery in 27°C distilled water.

The market for EPDM single ply roofing continues to expand. Chemically modified clays can be used as a reinforcing filler in black roofing compositions to help reduce cost.

The black EPDM roofing formulation is given in Table 6. Tables 7 and 8 show the physical properties of the unaged and aged test samples respectively.

These data show that treated clay P2 can be used partially to replace the carbon black content and meet all unaged and aged specifications.

Table 6

| Black EPDM roofing formulation | |
|---|---|
| Royalene 502 | 100.00 |
| N660 | 85.00 |
| Silane treated clay P2 | 100.00 |
| Napthenic oil | 95.00 |
| ZnO | 5.00 |
| Stearic acid | 1.00 |
| MBT | 1.50 |
| TMTM | 2.00 |
| Sulphur | 1.00 |
| Diethylene glycol | 0.50 |
| Total | 391.00 |

Table 7

Black EPDM roofing data
Unaged physcial properties

| Cured 20 min @ 160°C | | Original | Specifications |
|---|---|---|---|
| Modulus 100% | kg/sq.cm | 23.9 | |
| Modulus 200% | kg/sq.cm | 52.7 | |
| Modulus 300% | kg/sq.cm | 82.9 | |
| Tensile | kg/sq.cm | 106.2 | 98.4 min |
| Elongation | % | 630 | 300 min |
| Hardness | Shore A | 62 | 60 to 70 |
| Viscosity | ML4 @ 100°C | 28.5 | |
| Scorch | MS3 @ 121°C | 11.0 | |
| Trouser tear | kg/cm. | 18.9 | 5.4 min |

Table 8

Black EPDM roofing data
Aged physical properties

| Cured 20 min @ 160°C | | Aged | % Change | Specifications |
|---|---|---|---|---|
| Modulus 100% | kg/sq.cm | 26.7 | +10.5 | |
| Modulus 200% | kg/sq.cm | 59.7 | +11.8 | |
| Modulus 300% | kg/sq.cm | 91.4 | +9.2 | |
| Tensile | kg/sq.cm | 101.2 | –4.6 | –28 max. |
| Elongation | % | 560 | –11.1 | –25 max. |
| Hardness | Shore A | 65 | +3 pts. | |
| Fluid Immersion | % Vol. Change | | +2.3 | +8 max. |
| | % Wt. Change | | +2.0 | +8 max. |
| Low temp. brittle point | Deg. °C | –56 | | –52 min |
| Ozone resistance | Day 1 | 0 | | 0 cracking |
| | Day 2 | 0 | | 0 cracking |
| | Day 3 | 0 | | 0 cracking |
| | Day 4 | 0 | | 0 cracking |
| | Day 5 | 0 | | 0 cracking |
| | Day 6 | 0 | | 0 cracking |

The aging conditions for the preceding test results were as follows :
Oven Aging: 7 days @ 70°C in an air circulating oven; 24 hour recovery.
Fluid Immersion: 166 hours @ 70°C in distilled water; 1/2 hour recovery in distilled water @ 27°C.
Low Temperature Brittle Point: 5 specimens each tested in 100% Methanol cooling medium.
Ozone Resistance: Exposure 7 days @ 40°C @ 100 pphm at 20% elongation; 24 hours prestretch @ 27°C; rated every 24 hours.

Thus it can be seen that silane treated clays of the present invention have a higher safety factor with respect to tear and adhesion properties than can be achieved with prior art mineral filler products of another silane composition. They have the capability of partial replacement of carbon black. The novel products of this invention are the first low energy dependent mineral fillers which provide rubber properties similar to those of carbon black

Table 9

The following compounding ingredients are acknowledged as registered tradenames:

| Tradename | Source | Compositional Type |
|---|---|---|
| Natsyn 2200 | Goodyear | Polyisoprene Rubber |
| Vultac 5 | Pennwalt | Curing Agent |
| Vistalon 4608 | Exxon Chemicals Americas | EPDM Polymer |
| HT1066, HL1068 | Exxon Chemicals Americas | Halogenated Butyl Rubber |
| Mistron Vapor | Cypress Industrial Minerals Co | Talc |
| Epsyn 5206 | CoPolymer Rubber | EPDM Polymer |
| Irganox 1035 | Ciby-Geigy | Curing Agent |
| Sulfasan R | Monsanto | Sulfur Donor Curing Agent |
| Royalene 502 | Uniroyal Chemical | EPDM |
| Agerite White | R. T. Vanderbilt | Antioxidant |
| Nordel 1070 | DuPont | EPDM |
| Octamine | Uniroyal Chemical | Curing Agent |
| Hycar 1042 | B. F. Goodrich | Nitrile Rubber |
| Krynac 870/60 | Polysar | Nitrile PVC Rubber Blend |
| Wingstay 100 | Goodyear Chemicals | Antioxidant |
| Methyl Zimate | R. T. Vanderbilt | Curing Agent |
| SMR-S | | Standard Grade Natural Rubber |
| OBTS | | Thiobenzothiazole |
| TMTD | | Tetramethyl Thiuram Disulfide |

Table 10

| | |
|---|---|
| ASTM D3182 | Preparation of materials |
| ASTM D412 | Physical properties |
| ASTM D2240 | Hardness |
| ASTM D470 | Modified trouser tear |
| ASTM D1646 | Mooney viscosity and scorch |
| ASTM D623 | Heat generation ad flex fatigue |
| ASTM D945 | Compression set |
| ASTM D573 | Oven aging |
| Firestone procedure for ply to ply adhesion | |

## Claims

1. A finely divided particulate reinforcing material suitable as a filler for an elastomer, comprising a hydrous clay, the surface of which has been modified by treatment with a mercaptosilane, characterised in that the mercaptosilane is of the following general formula :

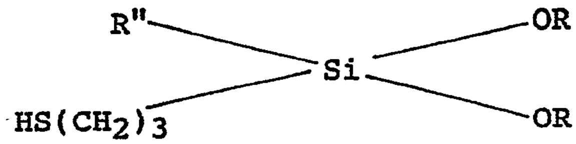

wherein R is an alkyl radical and R″ is an alkyl radical or an aryl radical.

2. A reinforcing material as claimed in Claim 1, wherein R″ is a lower alkyl radical, preferably methyl or ethyl, or an aryl radical, preferably phenyl and R is a lower alkyl, preferably having from one to four carbon atoms.

3. A reinforcing material as claimed in Claim 1 or 2, wherein the hydrous clay is a kaolin that has not been dehydroxylated.

4. A reinforcing material as claimed in Claim 1, 2 or 3, wherein from 0.2% to 0.7% by weight of the mercaptosilane is used, based on the weight of the dry clay.

5. A reinforcing material as claimed in Claim 1, 2, 3 or 4, wherein the mercaptosilane is an alkyldimethoxy mercaptopropylsilane, preferably methyldimethoxymercaptopropylsilane.

6. A process for preparing a finely divided particulate mercaptosilane surface treated clay suitable for use as a filler for an elastomer, which process comprises: preparing a dispersed aqueous clay slurry; adding to said slurry, in an amount of from 0.2 to 0.7% by weight, based on the weight of the dry clay, of a mercaptosilane of the following formula :

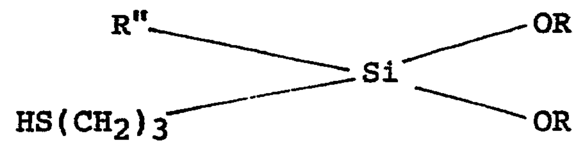

wherein R is an alkyl radical and R″ is an alkyl radical or an aryl radical; and spray drying said slurry to produce said mercaptosilane surface modified clay.

7. A process as claimed in Claim 6, wherein the clay is a kaolin that has not been calcined.

8. A process as claimed in Claim 6 or 7, wherein the mercaptosilane is an alkyldimethoxy mercaptopropylsilane, preferably a methyldimethoxy mercaptopropylsilane.

9. A method for reinforcing elastomers comprising the steps of: (i) modifying the surface of a hydrous clay by treatment of the clay with from 0.2 to 0.7% by weight, based on the weight of the dry clay, of a mercaptosilane having the general formula :

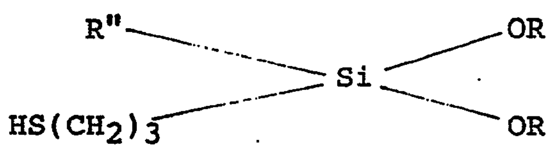

in which R is an alkyl radical and R″ is an alkyl radical or an aryl radical; and (ii) combining the thus surface modified clay with an elastomeric material.

10. A method as claimed in Claim 9, wherein the clay is a kaolin that has not been dehydroxylated.

11. A method as claimed in Claim 9 or 10, wherein the mercaptosilane is an alkyldimethoxy-mercaptopropylsilane, preferably methyldimethoxy mercaptopropylsilane.

12. A method as claimed in Claim 9, 10 or 11, wherein the elastomer forms part of a tyre.

13. A reinforced elastomer comprising an elastomeric material and, as a filler, a hydrous clay the surface of which has been modified by treatment with a mercaptosilane having the general formula :

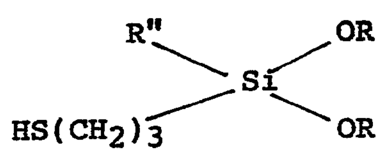

in which R is an alkyl, and R″ is an alkyl radical or an aryl radical.

**Patentansprüche**

1. Fein zerteiltes, aus Partikeln bestehendes und als Füller für ein Elastomer geeignetes Verstärkungsmaterial auf der Basis von wasserhaltigem Ton, dessen Oberfläche durch Behandlung mit einem Mercaptosilan modifiziert worden ist, dadurch gekennzeichnet, daß das Mercaptosilan ein solches der allgemeinen Formel

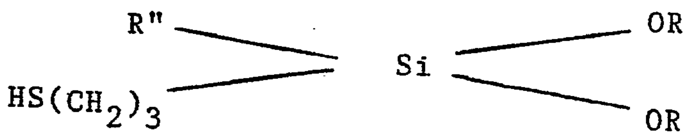

ist, worin R einen Alkylrest und R″ einen Alkylrest oder einen Arylrest bedeuten.

2. Verstärkungsmaterial gemäß Anspruch 1, worin R″ ein Niederalkylrest, vorzugsweise Methyl oder Ethyl oder ein Arylrest, vorzugsweise Phenyl, ist und R einem Niederalkyl, vorzugsweise einem solchen mit 1 bis 4 C-Atomen entspricht.

3. Verstärkungsmaterial gemäß Anspruch 1 oder 2, worin der wasserhaltige Ton ein nicht entwässerter Kaolin ist.

4. Verstärkungsmaterial gemäß Anspruch 1, 2 oder 3, worin 0,2 bis 0,7 Gew.-% des Marcaptosilans, berechnet auf das Gewicht des trockenen Tons, verwendet ist.

5. Verstärkungsmaterial gemäß Anspruch 1, 2, 3 oder 4, worin das Mercaptosilan ein Alkyldimethoxymercaptoprogylsilan, vorzugsweise Methyldimethoxymercaptopropylsilan ist.

6. Verfahren zur Herstellung eines feinzerteilten, aus Partikeln bestehenden und an der Oberfläche mit einem Mercaptosilan behandelten Tons, der als Füller für ein Elastomer geeignet ist, umfassend die folgenden Stufen: Herstellung einer dispergierten wässerigen Ton-Aufschlämmung, Zugabe von 0,2 bis 0,7 Gew.-%, bezogen auf das Gewicht des trockenen Tons, eines Mercaptosilans der allgemeinen Formel

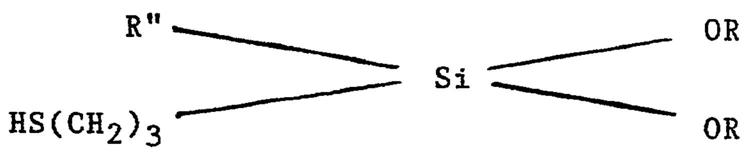

worin R einen Alkylrest und R″ einen Alkylrest oder Arylrest darstellen, zur Aufschlämmung und Sprühtrocknen der Aufschlämmung zur Gewinnung des an der Oberfläche mit dem Mercaptosilan modifizierten Tons.

7. Verfahren gemäß Anspruch 6, worin der Ton ein nicht calcinierter Kaolin ist.

8. Verfahren gemäß Anspruch 6 oder 7, worin das Mercaptosilan ein Alkyldimethoxymercaptopropylsilan, vorzugsweise Methyldimethoxymercaptopropylsilan ist.

9. Verfahren zur Verstärkung von Elastomeren, umfassend die folgenden Stufen: (i) Modifizieren der Oberfläche eines wasserhaltigen Tons durch dessen Behandlung mit 0,2 bis 0,7 Gew.-%, bezogen auf den trockenen Ton, mit einem Mercaptosilan der allgemeinen Formel

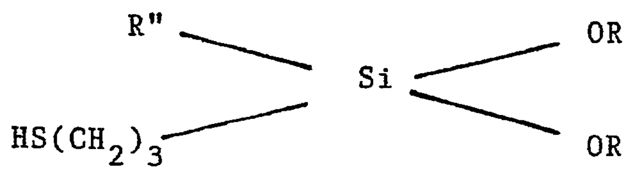

in welcher R einen Alkylrest und R″ einen Alkylrest oder einen Arylrest bedeuten, und (ii) Vereinigen des so an der Oberfläche modifizierten Tons mit einem elastomeren Material.

10. Verfahren gemäß Anspruch 9, worin der Ton ein nicht entwässerter Kaolin ist.

11. Verfahren gemäß Anspruch 9 oder 10, worin das Mercaptosilan ein Alkyldimethoxymercaptopropylsilan, vorzugsweise Methyldimethoxymercaptopropylsilan ist.

12. Verfahren gemäß Anspruch 9, 10 oder 11, worin das Elastomer Bestandteil eines Reifens ist.

13. Verstärktes Elastomer, enthaltend ein elastomeres Material und als Füller einen wasserhaltigen Ton, dessen Oberfläche modifiziert worden ist durch Behandlung mit einem Mercaptosilan der allgemeinen Formel

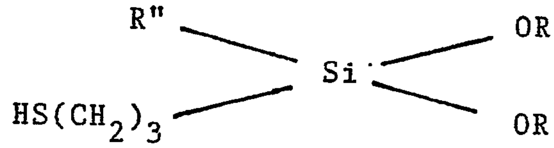

in der R einen Alkylrest und R″ einen Alkylrest oder Arylrest bedeuten.

**Revendications**

1. Matériau de renforcement particulaire finement divisé approprié comme charge pour un élastomère, comprenant une argile hydratée dont la surface a été modifiée par traitement par un mercaptosilane, caractérisé en ce que le mercaptosilane a la formule générale suivante:

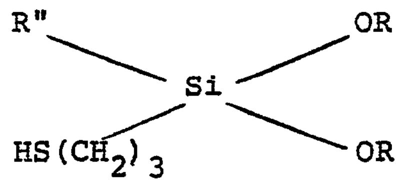

dans laquelle R est un radical alkyle et R″ est un radical alkyle ou un radical aryle.

2. Matériau de renforcement selon la revendication 1, dans lequel R″ est un radical alkyle inférieur, de préférence un radical méthyle ou éthyle, ou un radical aryle, de préférence un radical phényle et R est un radical alkyle inférieur, ayant de préférence de un à quatre atomes de carbone.

3. Matériau de renforcement selon la revendication 1 ou 2, dans lequel l'argile hydratée est un kaolin qui n'a pas été déshydroxylé.

4. Matériau de renforcement selon la revendication 1, 2 ou 3, dans lequel on utilise de 0,2 à 0,7% en poids de mercaptosilane par rapport au poids de l'argile sèche.

5. Matériau de renforcement selon la revendication 1, 2, 3 ou 4 dans lequel le mercaptosilane est un alkyldiméthoxymercaptopropylsilane, de préférence le méthyldiméthoxymercaptopropylsilane.

6. Procédé de préparation d'une argile particulaire finement divisée traitée en surface par un mercaptosilane destinée à l'emploi comme charge pour un élastomère, ce procédé comprenant: la préparation d'une suspension aqueuse dispersée d'argile, l'addition à cette suspension, en quantités allant de 0,2 à 0,7% en poids par rapport au poids de l'argile sèche, d'un mercaptosilane ayant la formule suivante:

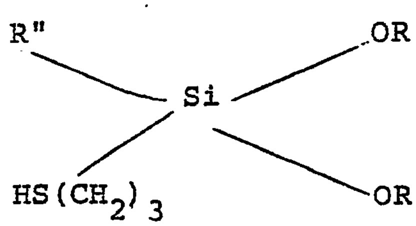

dans laquelle R est un radical alkyle et R″ est un radical alkyle ou un radical aryle et le séchage par pulvérisation de cette suspension pour produire l'argile modifiée en surface par le mercaptosilane.

7. Procédé selon la revendication 6 dans lequel l'argile est un kaolin qui n'a pas été calciné.

8. Procédé selon la revendication 6 ou 7 dans lequel le mercaptosilane est un alkyldméthoxymercaptopropylsilane, de préférence le méthyldiméthoxymercaptopropylsilane.

9. Procédé de renforcement d'élastomères comprenant les étapes suivantes:

(i) modification de la surface d'une argile hydratée par traitement de l'argile avec une quantité allant de 0,2 à 0,7 en poids, par rapport au poids de l'argile sèche, d'un mercaptosilane ayant la formule générale:

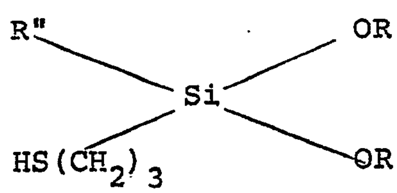

dans laquelle R est un radical alkyle et R″ est un radical alkyle ou un radical aryle, et

(ii) la combinaison de l'argile ainsi modifiée en surface avec un matériau élastomère.

10. Procédé selon la revendication 9 dans lequel l'argile est un kaolin qui n'a pas été déshydroxylé.

11. Procédé selon la revendication 9 ou 10 dans lequel le mercaptosilane est un alkyldiméthoxymercaptopropylsilane, de préférence le méthyldiméthoxymercaptopropylsilane.

12. Procédé selon la revendication 9, 10 ou 11, dans lequel l'élastomère fait partie d'un pneu.

13. Elastomère renforcé comprenant un matériau élastomère et, comme charge, une argile hydratée dont la surface a été modifiée par traitement par un mercaptosilane ayant la formule générale:

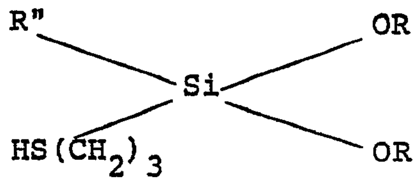

dans laquelle R est un radical alkyle et R″ est un radical alkyle ou un radical aryle.